# EUROPEAN PATENT APPLICATION

(11) **EP 4 657 562 A1**
(43) Date of publication of application: **03.12.2025**
(21) Application number: 25179611.6
(22) Date of filing: 28.05.2025
(51) Int. Cl.: H01M 4/36, H01M 4/505, H01M 4/525, H01M 10/0525, H01M 10/0567

(54) **SECONDARY BATTERY AND ELECTRONIC DEVICE**

(30) Priority: 31.05.2024 CN 202410706979
(71) Applicant: Ningde Amperex Technology Ltd., Ningde City, Fujian Province 352100 (CN)
(72) Inventor: XU, Qing, Ningde City, Fujian Province, China, 352100 (CN)
(74) Representative: Icosa

(57) **Abstract**

A secondary battery includes a positive electrode, a negative electrode, and an electrolyte solution. The positive electrode includes a positive current collector and a positive electrode material layer. The positive electrode material layer includes a first material layer and a second material layer. The second material layer is disposed between the positive current collector and the first material layer. The first material layer includes a nickel-cobalt-manganese ternary material. The nickel-cobalt-manganese ternary material includes a first element. The first element includes magnesium and aluminum. The second material layer includes an inorganic additive. The inorganic additive includes a second element. The second element includes at least one of titanium, chromium, yttrium, zirconium, lanthanum, niobium, indium, tin, zinc, or antimony. The electrolyte solution includes a dinitrile compound. The secondary battery exhibits a good capacity retention rate and a relatively small amount of residual gas.

## Description

### TECHNICAL FIELD

This application relates to the technical field of secondary batteries, and in particular, to a secondary battery and an electronic device.

### BACKGROUND

A secondary battery, also known as a rechargeable battery, is a type of battery that is repeatedly chargeable and dischargeable. Among secondary batteries, a ternary lithium-ion battery is widely used in the fields such as portable electronic devices and electric vehicles by virtue of relatively high charging efficiency. With the advancement of technology and the improvement of living standards, the frequency of use of ternary lithium-ion batteries has increased significantly, and the performance metrics such as cycle life of the ternary lithium-ion batteries urgently need to be improved.

### SUMMARY

In view of the above situation, this application provides a secondary battery and an electronic device to improve the cycle performance of the secondary battery and reduce gas production by using a nickel-cobalt-manganese ternary material, a first element, and a second element in a positive electrode in coordination with a dinitrile compound in an electrolyte solution.

According to a first aspect, this application provides a secondary battery. The secondary battery includes a positive electrode, a negative electrode, and an electrolyte solution. The positive electrode includes a positive current collector and a positive electrode material layer. The positive electrode material layer includes a first material layer and a second material layer. The second material layer is disposed between the positive current collector and the first material layer. The first material layer includes a nickel-cobalt-manganese ternary material. The nickel-cobalt-manganese ternary material includes a first element. The first element includes magnesium and aluminum. The second material layer includes an inorganic additive. The inorganic additive includes a second element. The second element includes at least one of titanium, chromium, yttrium, zirconium, lanthanum, niobium, indium, tin, zinc, or antimony. The electrolyte solution includes a dinitrile compound.

The positive electrode material layer in the secondary battery provided in this application can interact synergistically with the dinitrile compound in the electrolyte solution to improve the toughness of the positive electrode interface film, improve the capacity retention rate of the secondary battery, and reduce gas production.

In some embodiments, the first material layer further includes lithium manganese iron phosphate. The lithium manganese iron phosphate used in combination with the above secondary battery system can further improve the capacity retention rate of the secondary battery and reduce the amount of residual gas.

In some embodiments, the second element includes indium, tin, and antimony, thereby further improving the capacity retention rate and the amount of residual gas of the secondary battery.

In some embodiments, when the second element includes indium, tin, and antimony, a mass ratio between indium, tin, and antimony is 1 : (0.6 to 1.4) : (0.6 to 1.4). The indium, tin, and antimony added at this ratio can further improve the capacity retention rate and the amount of residual gas of the secondary battery.

In some embodiments, the nickel-cobalt-manganese ternary material further includes a third element. The third element includes strontium and/or tungsten. The strontium and/or tungsten added to the nickel-cobalt-manganese ternary material can further improve the capacity retention rate and the amount of residual gas of the secondary battery.

In some embodiments, the dinitrile compound includes at least one of: succinonitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, ethylene glycol bis(2-cyanoethyl)ether, diethylene glycol bis(2-cyanoethyl)ether, triethylene glycol bis(2-cyanoethyl)ether, tetraethylene glycol bis(2-cyanoethyl)ether, 3,6,9,12,15,18-hexaoxaeicosanedinitrile, 1,3-bis(2-cyanoethoxy)propane, 1,4-bis(2-cyanoethoxy)butane, 1,5-bis(2-cyanoethoxy)pentane, ethylene glycol bis(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, or 1,6-dicyano-2-methyl-5-methyl-3-hexene. The dinitrile compound can coordinate with the positive electrode material layer of this application more synergistically to improve the capacity retention rate and the amount of residual gas of the secondary battery.

In some embodiments, the secondary battery satisfies the following condition: based on a total mass of the positive electrode material layer, a mass content of the first element is n₁, satisfying: 1200 ppm ≤ n₁ ≤ 10000 ppm. As an example, based on the total mass of the positive electrode material layer, the mass content n₁ of the first element is selected from 1200 ppm, 1630 ppm, 2110 ppm, 2320 ppm, 2820 ppm, 3260 ppm, 3600 ppm, 4380 ppm, 4720 ppm, 5000 ppm, 5390 ppm, 6110 ppm, 6390 ppm, 7170 ppm, 7370 ppm, 7900 ppm, 8380 ppm, 8880 ppm, 9520 ppm, 9860 ppm, 10000 ppm, or a value falling within a range formed by any two thereof. When the mass content of the first element in the positive electrode material satisfies the above range, this application can further improve the capacity retention rate and the amount of residual gas of the secondary battery.

To further improve the capacity retention rate and the amount of residual gas of the secondary battery, the secondary battery in this application satisfies: 2500 ppm ≤ n₁ ≤ 8000 ppm. In particular, when 3000 ppm ≤ n₁ ≤ 6000 ppm, by working in coordination with the second material layer and the electrolyte solution, the first element can more significantly improve the capacity retention rate and the amount of residual gas of the secondary battery.

In some embodiments, in the first element, a mass ratio of magnesium to aluminum is 1 : (0.8 to 1.2). For example, when the mass content of magnesium in the first element is 1 part, the mass content of aluminum is 0.8, 0.9, 1, 1.1, 1.2 parts, or a value falling within a range formed by any two thereof. The magnesium and aluminum added at this ratio can further improve the capacity retention rate and the amount of residual gas of the secondary battery. Especially, when the mass ratio of magnesium to aluminum in the first element is 1 : 1, the capacity retention rate and the amount of residual gas of the secondary battery are more significantly improved.

In some embodiments, based on a total mass of the positive electrode material layer, a mass content of the second element is n₂, satisfying: 1 ppm ≤ n₂ ≤ 5000 ppm. As an example, based on the total mass of the positive electrode material layer, the mass content n₂ of the second element is selected from 1 ppm, 50 ppm, 530 ppm, 540 ppm, 1030 ppm, 1120 ppm, 1470 ppm, 1590 ppm, 1900 ppm, 2290 ppm, 2400 ppm, 2710 ppm, 2970 ppm, 3200 ppm, 3470 ppm, 3730 ppm, 4090 ppm, 4240 ppm, 4640 ppm, 4980 ppm, 5000 ppm, or a value falling within a range formed by any two thereof. In some preferred embodiments, 150 ppm ≤ n₂ ≤ 3500 ppm. In some more preferred embodiments, 500 ppm ≤ n₂ ≤ 2000 ppm. The second element satisfying the above mass content can coordinate closely with the electrolyte solution to exert a good reinforcing effect, thereby improving the capacity retention rate of the secondary battery and reducing the amount of residual gas.

In some embodiments, based on a total mass of the positive electrode material layer, a mass content of the third element is n₃, satisfying: 1 ppm ≤ n₃ ≤ 5000 ppm. As an example, based on the total mass of the positive electrode material layer, the mass content n₃ of the third element is selected from 1 ppm, 30 ppm, 330 ppm, 570 ppm, 1010 ppm, 1200 ppm, 1510 ppm, 1610 ppm, 2030 ppm, 2370 ppm, 2440 ppm, 2680 ppm, 3080 ppm, 3380 ppm, 3440 ppm, 3880 ppm, 4140 ppm, 4260 ppm, 4730 ppm, 4880 ppm, 5000 ppm, or a value falling within a range formed by any two thereof. In some more preferred embodiments, 1250 ppm ≤ n₃ ≤ 2500 ppm. By controlling the mass content of strontium and/or tungsten, this application can further improve the capacity retention rate and the amount of residual gas of the secondary battery.

In some embodiments, the negative electrode includes a negative electrode material layer. The negative electrode material layer includes a silicon-based material. The secondary battery satisfying the above condition can further improve the capacity retention rate and the amount of residual gas.

In some embodiments, the electrolyte solution further includes vinylene carbonate (VC) and diethyl carbonate (DEC). Based on a mass of the electrolyte solution, an aggregate mass pencentage of the vinylene carbonate and the diethyl carbonate is 19% to 40%. As an example, based on the mass of the electrolyte solution, the aggregate mass pencentage of the vinylene carbonate and the diethyl carbonate is 19%, 20%, 21%, 22%, 23%, 24%, 25%, 26%, 27%, 28%, 29%, 30%, 31%, 32%, 33%, 34%, 35%, 36%, 37%, 38%, 39%, 40%, or a value falling within a range formed by any two thereof. Preferably, the aggregate mass pencentage is 19.3% to 29.7%. By further adding the vinylene carbonate and the diethyl carbonate to the electrolyte solution for coordination and controlling the mass percentages of the two constituents in the electrolyte solution to meet the above ranges, this application can further improve the capacity retention rate and the amount of residual gas of the secondary battery.

In some embodiments, based on the mass of the electrolyte solution, a mass pencentage of the vinylene carbonate is 0.01% to 1%. As an example, based on the mass of the electrolyte solution, the mass pencentage of the vinylene carbonate is 0.01%, 0.02%, 0.11%, 0.16%, 0.20%, 0.26%, 0.28%, 0.33%, 0.41%, 0.43%, 0.48%, 0.58%, 0.61%, 0.67%, 0.70%, 0.79%, 0.84%, 0.86%, 0.95%, 0.97%, 1%, or a value falling within a range formed by any two thereof. Preferably, the mass pencentage is 0.3% to 0.7%. By controlling the mass pencentage of the vinylene carbonate in the electrolyte solution to fall within the above range, this application can further improve the capacity retention rate and the amount of residual gas of the secondary battery.

In some embodiments, based on the mass of the electrolyte solution, a mass pencentage of the diethyl carbonate is 19% to 39%. As an example, based on the mass of the electrolyte solution, the mass pencentage of the diethyl carbonate is 19%, 20%, 21%, 22%, 23%, 24%, 25%, 26%, 27%, 28%, 29%, 30%, 31%, 32%, 33%, 34%, 35%, 36%, 37%, 38%, 39%, or a value falling within a range formed by any two thereof. Preferably, the mass pencentage is 21% to 29%. By controlling the mass pencentage of the diethyl carbonate in the electrolyte solution to fall within the above range, this application can further improve the capacity retention rate and the amount of residual gas of the secondary battery.

In some embodiments, the electrolyte solution further includes difluoroethyl acetate (DFA). Based on a mass of the electrolyte solution, a mass pencentage of the difluoroethyl acetate is 0.01% to 3%. As an example, based on the mass of the electrolyte solution, the mass pencentage of the difluoroethyl acetate is 0.01%, 0.02%, 0.26%, 0.35%, 0.62%, 0.75%, 0.82%, 0.97%, 1.12%, 1.32%, 1.47%, 1.65%, 1.82%, 1.99%, 2.07%, 2.28%, 2.40%, 2.62%, 2.82%, 2.94%, 3%, or a value falling within a range formed by any two thereof. Preferably, the mass pencentage is 0.1% to 1.2%. Working in coordination with the secondary battery system of this application, the difluoroethyl acetate added to the electrolyte solution at the mass pencentage specified above can further improve the capacity retention rate and the amount of residual gas of the secondary battery.

In some embodiments, based on a mass of the electrolyte solution, a mass pencentage of the dinitrile compound is 0.1% to 5%. As an example, based on the mass of the electrolyte solution, the mass pencentage of the dinitrile compound is 0.1%, 0.2%, 0.5%, 0.7%, 0.9%, 1.2%, 1.5%, 1.8%, 2.1%, 2.2%, 2.6%, 2.8%, 3.0%, 3.5%, 3.5%, 3.8%, 4.2%, 4.4%, 4.6%, 4.8%, 5%, or a value falling within a range formed by any two thereof. Preferably, the mass pencentage is 0.3% to 1.2%. The secondary battery satisfying this condition exhibits a higher capacity retention rate and a smaller amount of residual gas.

According to a second aspect, this application further provides an electronic device. The electronic device includes any one of the above-mentioned secondary batteries.

The secondary battery and electronic device provided in this application produce at least the following beneficial effects:

This application adds magnesium and aluminum to the nickel-cobalt-manganese ternary material to reinforce the structure of the material. The magnesium and aluminum can coordinate with the inorganic additive and with the dinitrile compound in the electrolyte solution to produce a synergistic effect. The dinitrile compound can form a uniform protection film at the positive electrode interface in this application, and work synergistically with the first material layer and the second material layer in the positive electrode to stabilize the positive electrode and the electrolyte solution, so that the secondary battery exhibits a relatively high capacity retention rate and a relatively small amount of residual gas.

### DETAILED DESCRIPTION

To make the objectives, technical solutions, and advantages of this application clearer, the following describes this application in more detail with reference to embodiments. Understandably, the specific embodiments described herein are merely intended to explain this application, but are not intended to limit this application.

To solve the problem in the prior art, this application provides a secondary battery. The secondary battery includes a positive electrode, a negative electrode, and an electrolyte solution. The positive electrode includes a positive current collector and a positive electrode material layer. The positive electrode material layer includes a first material layer and a second material layer. The second material layer is disposed between the positive current collector and the first material layer. The first material layer includes a nickel-cobalt-manganese ternary material. The nickel-cobalt-manganese ternary material includes a first element. The first element includes magnesium and aluminum. The second material layer includes an inorganic additive. The inorganic additive includes a second element. The second element includes at least one of titanium (Ti), chromium (Cr), yttrium (Y), zirconium (Zr), lanthanum (La), niobium (Nb), indium (In), tin (Sn), zinc (Zn), or antimony (Sb). The electrolyte solution includes a dinitrile compound.

In some embodiments, the nickel-cobalt-manganese ternary material is prepared by a method including the following steps: mixing Co₃O₄, Li₂CO3, an aluminum source, a magnesium source, a nickel source, and a manganese source at a specified mixing ratio, and then calcining the mixture in a 700 °C to 1200 °C furnace for 7 to 20 hours to obtain a nickel-cobalt-manganese ternary material doped with the first element.

In some embodiments, Co₃O₄, Li₂CO₃, the aluminum source, the magnesium source, the nickel source, and the manganese source may be mixed at a specified ratio with a raw material that provides strontium and/or tungsten to obtain a nickel-cobalt-manganese ternary material containing the first element and a third element.

In some embodiments, the second material layer includes an inorganic additive. The inorganic additive includes a second element. In this application, the inorganic additive is selected from an inorganic metal oxide and/or an inorganic metal hydroxide, for example, titanium dioxide, chromium oxide, yttrium oxide, zirconium dioxide, lanthanum oxide, niobium monoxide, niobium dioxide, niobium trioxide, niobium pentoxide, indium trioxide, tin dioxide, zinc oxide, or antimony trioxide.

In some embodiments, the positive electrode material layer may be located on one side or both sides of the positive current collector. In some embodiments, the positive current collector may be an aluminum foil, or may be another positive current collector commonly used in this field. In some embodiments, the thickness of the positive current collector may be 1 µm to 200 µm. In some embodiments, the positive electrode material layer may be applied on just a partial region of the positive current collector. In some embodiments, the thickness of the positive electrode material layer may be 10 µm to 90 µm. Understandably, the examples above are merely illustrative, and other thicknesses may apply as appropriate.

In some embodiments, as mentioned above, the positive electrode material may include lithium manganese iron phosphate. The lithium manganese iron phosphate may be doped and/or coated.

In some embodiments, the positive electrode material layer further includes a positive electrode binder and a positive conductive agent. In some embodiments, the positive electrode binder may include at least one of polyvinylidene fluoride (PVDF), poly(vinylidene fluoride-co-hexafluoropropylene), poly(styrene-co-acrylate), poly(styrene-co-butadiene), polyamide, polyacrylonitrile, polyacrylic ester, polyacrylic acid, sodium polyacrylate, sodium carboxymethyl cellulose, polyvinyl acetate, polyvinylpyrrolidone, polyvinyl ether, polytetrafluoroethylene, or polyhexafluoropropylene. In some embodiments, the positive conductive agent may include at least one of conductive carbon black, acetylene black, Ketjen black, graphene, carbon nanotubes, or carbon fibers. In some embodiments, a mass ratio between the positive electrode material, the positive conductive agent, and the positive electrode binder in the positive electrode material layer may be (80 to 98) : (0.5 to 10) : (0.5 to 10). Understandably, described above are merely examples. The positive electrode material layer may adopt any other materials, thicknesses, and mass ratios as appropriate.

In this application, the dinitrile compound means an organic compound containing a hydrocarbon group and two cyano groups (-CN) connected by carbon atoms.

In some embodiments, the electrolyte solution further includes an ionizable lithium salt. The ionizable lithium salt includes at least one of LiPF₆, LiSbF₆, LiAsF₆, LiClO₄, LiN(C₂F₅SO₂)₂, CF₃SO₃Li, LiC(CF₃SO₂)₃, or LiC₄BO₈. The concentration of the ionizable lithium salt in the electrolyte solution is not particularly limited herein, and is preferably 0.5 mol/L or above, more preferably 0.8 mol/L or above, and further preferably 1.0 mol/L or above. In addition, the concentration of the ionizable lithium salt is preferably 3 mol/L or less, more preferably 2 mol/L or less, further preferably 1.8 mol/L or less, and extraordinarily preferably 1.6 mol/L or less. If the concentration of the ionizable lithium salt is excessively low, the conductivity of the electrolyte solution may be caused to be insufficient. On the other hand, if the concentration of the ionizable lithium salt is excessively high, the viscosity of the electrolyte solution may be caused to increase, thereby reducing the conductivity and possibly deteriorating the performance of the secondary battery.

In some embodiments, the electrolyte solution further includes at least one of lithium difluorophosphate (LiPO₂F₂), lithium difluoro(oxalato)borate (LiDFOB), vinylene carbonate, or diethyl carbonate (LiBOB), lithium tetrafluoroborate (LiBF₄), lithium fluorosulfonate (LiSO₃F), lithium bis(trifluoromethanesulfonyl)imide (LiTFSI), or lithium bis(fluorosulfonyl)imide (LiFSI).

In some embodiments, the electrolyte solution further includes at least one of a fluoroether compound or a fluorocarbonate ester compound, for example, hydrofluoroether (HFE-458) or fluoroethylene carbonate (FEC).

In some embodiments, the electrolyte solution may further include a nonaqueous solvent. The nonaqueous solvent may be selected from a carbonate ester compound, a carboxylate ester compound, an ether compound, a phosphate ester compound, other organic solvents, or any combination thereof.

Optionally, the carbonate ester compound may be a chain carbonate ester compound, a cyclic carbonate ester compound, or a combination thereof. On the other hand, the carbonate ester compound may be a fluorocarbonate ester compound, a non-fluorinated carbonate ester compound, or a combination thereof.

Specifically, examples of the chain carbonate ester compound are dimethyl carbonate (DMC), dipropyl carbonate (DPC), methyl propyl carbonate (MPC), ethylene propyl carbonate (EPC), ethyl methyl carbonate (EMC), or any combination thereof. Examples of the cyclic carbonate ester compound are ethylene carbonate (EC), propylene carbonate (PC), butylene carbonate (BC), vinyl ethylene carbonate (VEC), or any combination thereof. Examples of the fluorocarbonate ester compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, trifluoromethyl ethylene carbonate, or any combination thereof.

Specifically, examples of the carboxylate ester compound are methyl acetate, ethyl acetate, n-propyl acetate, tert-butyl acetate, methyl propionate, ethyl propionate, propyl propionate, γ-butyrolactone, decanolactone, valerolactone, mevalonolactone, caprolactone, methyl formate, or any combination thereof.

Specifically, examples of the ether compound are dibutyl ether, tetraglyme, diglyme, 1,2-dimethoxyethane, 1,2-diethoxyethane, ethoxy-methoxyethane, 2-methyltetrahydrofuran, tetrahydrofuran, or any combination thereof.

Specifically, examples of the phosphate ester compound are trimethyl phosphate, triethyl phosphate, trioctyl phosphate, or any combination thereof.

Specifically, examples of the other organic solvent are dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, or any combination thereof.

In some embodiments, the negative electrode includes a negative current collector and a negative electrode material layer disposed on the negative current collector. The negative electrode material layer may be disposed on one side or both sides of the negative current collector. In some embodiments, the negative current collector may be at least one of a copper foil, a nickel foil, or a carbon-based current collector. In some embodiments, the thickness of the negative current collector may be 1 µm to 200 µm. In some embodiments, the negative electrode material layer may be applied onto just a partial region of the negative current collector. In some embodiments, the thickness of the negative electrode material layer may be 10 µm to 100 µm. Understandably, the examples above are merely illustrative, and other thicknesses may apply as appropriate.

In some embodiments, as mentioned above, the negative electrode material layer includes a silicon-based material. In some embodiments, the silicon-based material includes at least one of silicon, a silicon oxide compound, a silicon carbide compound, or a silicon alloy. In some embodiments, the negative electrode material includes a combination of a silicon-based material and a carbon material mixed at a mass ratio of 1 : (5 to 12).

In some embodiments, the negative electrode material layer may further include a negative conductive agent and/or a negative electrode binder. The negative conductive agent may include at least one of carbon black, acetylene black, Ketjen black, graphene, carbon nanotubes, or carbon fibers. In some embodiments, the negative electrode binder may include at least one of carboxymethyl cellulose (CMC), polyacrylic acid, polyacrylate salt, polyacrylate ester, polyvinylpyrrolidone, polyimide, polysiloxane, or styrene butadiene rubber. Understandably, the materials disclosed above are merely illustrative, and the negative electrode material layer may be made of any other appropriate materials.

In some embodiments, the negative electrode is prepared by a method including the following steps: mixing a negative electrode material, a negative electrode binder, and deionized water to obtain a negative electrode slurry; applying the negative electrode slurry onto a surface of a negative current collector, and then performing oven-drying, cold-pressing, cutting, and tab welding to obtain a negative electrode.

In some embodiments, a mass ratio between the negative electrode material, the negative conductive agent, and the negative electrode binder in the negative electrode material layer may be (80 to 99) : (0.5 to 10) : (0.5 to 10). Understandably, the mass ratio is merely illustrative but not intended to limit this application.

In some embodiments, the separator includes at least one of polyethylene, polypropylene, polyvinylidene fluoride, polyethylene terephthalate, polyimide, or aramid fiber. For example, the polyethylene includes at least one of high-density polyethylene, low-density polyethylene, or ultra-high-molecular-weight polyethylene. In particular, the polyethylene and the polypropylene are highly effective in preventing short circuits, and can improve safety of the battery through a shutdown effect.

In some embodiments, a surface of the separator may further include a porous layer. The porous layer is disposed on at least one surface of the separator. The porous layer includes at least one of inorganic particles or a binder. The inorganic particles are at least one selected from aluminum oxide (Al₂O₃), silicon oxide (SiO₂), magnesium oxide (MgO), titanium oxide (TiO₂), hafnium dioxide (HfO₂), tin dioxide (SnO₂), ceria (CeO₂), nickel oxide (NiO), zinc oxide (ZnO), calcium oxide (CaO), zirconium oxide (ZrO₂), yttrium oxide (Y₂O₃), silicon carbide (SiC), boehmite, aluminum hydroxide, magnesium hydroxide, calcium hydroxide, and barium sulfate. In some embodiments, a diameter of a pore of the separator is within a range of approximately 0.01 µm to 1 µm. The binder in the porous layer is at least one selected from polyvinylidene difluoride, poly(vinylidene difluoride-co-hexafluoropropylene), polyamide, polyacrylonitrile, polyacrylic ester, polyacrylic acid, sodium polyacrylate, sodium carboxymethyl cellulose, polyvinylpyrrolidone, polyvinyl ether, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments, the secondary battery is a lithium-ion battery as an example, but this application is not limited to the example.

In some embodiments of this application, using a lithium-ion battery as an example, the lithium-ion battery is prepared by: winding or stacking the positive electrode, the separator, and the negative electrode sequentially to form an electrode assembly, putting the electrode assembly into a housing such as an aluminum laminated film to be sealed, injecting an electrolyte solution into the housing, and performing chemical formation and sealing.

An embodiment of this application further provides an electronic device containing the above-mentioned secondary battery. The electronic device according to this embodiment of this application is not particularly limited, and may be any electronic device known in the prior art. In some embodiments, the electronic device may include, but not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household battery, lithium-ion capacitor, and the like.

Some specific embodiments and comparative embodiments are enumerated below to give a clearer description of this application, using a lithium-ion battery as an example. Unless otherwise specified, the raw materials used in the following embodiments are all commercial products commonly available from the market, and the apparatuses or devices used are all purchased from a conventional market.

### Embodiment 1

A secondary battery in this embodiment includes a positive electrode, a negative electrode, and an electrolyte solution. The positive electrode includes a positive electrode material layer. The positive electrode material layer includes a first material layer and a second material layer. The second material layer is disposed between a positive current collector and the first material layer. The first material layer includes a nickel-cobalt-manganese ternary material. The nickel-cobalt-manganese ternary material includes a first element. The first element includes magnesium and aluminum. The second material layer includes an inorganic additive. The inorganic additive is tin dioxide. Based on the total mass of the positive electrode material layer, the mass contents of magnesium and aluminum in the first element are 1250 ppm and 1250 ppm respectively (the mass ratio is 1 : 1). The total mass content of the first element is n₁ = 2500 ppm. The mass content of the second element (tin) is 150 ppm. The electrolyte solution includes a dinitrile compound. The dinitrile compound is adiponitrile. Based on the mass of the electrolyte solution, the mass pencentage of the adiponitrile is 0.1%.

The secondary battery of this embodiment is prepared by a method including the following steps:

Preparing a positive electrode:

Tin dioxide is used as an inorganic additive. 65 wt% tin dioxide, 15 wt% acetylene black, and 15% wt PVDF are mixed, and then deionized water is added into the mixture. The constituents are mixed well to form a slurry. The slurry is applied onto both sides of a 10 µm-thick positive current collector aluminum foil, and dried to form a second material layer.

A nickel-cobalt-manganese ternary material (purchased) is used a positive electrode material. The positive electrode material, conductive carbon black as a conductive agent, and polyvinylidene fluoride (PVDF) as a binder are mixed at a mass ratio of 96.6 : 1.5 : 1.9. N-methyl-pyrrolidone (NMP) is added to the mixture. The mixture is stirred well with a vacuum mixer to obtain a positive electrode slurry in which a solid content is 75 wt%. The positive electrode slurry is evenly applied onto a surface of the second material layer on one side of the positive current collector aluminum foil, and dried at 120 °C to obtain a positive electrode plate coated with an 80 µm-thick first material layer on a single side. The above steps are repeated on the surface of the second material layer on the other side of the positive current collector aluminum foil to obtain a positive electrode plate coated with the first material layer on both sides. Subsequently, the positive electrode plate is cold-pressed, cut, and slit to obtain a positive electrode of 470 mm × 92 mm in size.

Preparing a negative electrode: Artificial graphite as a negative electrode material, conductive carbon black as a conductive agent, styrene-butadiene rubber (SBR) as a binder, and sodium carboxymethyl cellulose (CMC) as a thickener are mixed at a mass ratio of 96.5 : 1.5 : 1 : 1. Deionized water is added into the mixture. The mixture is stirred well with a vacuum mixer to obtain a negative electrode slurry in which a solid content is 75 wt%. The negative electrode slurry is evenly applied onto one surface of negative current collector copper foil, and dried at 120 °C to obtain a negative electrode plate coated with a 90 µm-thick negative electrode material layer on a single side. The above steps are repeated on the other surface of the negative current collector copper foil to obtain a negative electrode plate coated with the negative electrode material layer on both sides. The negative electrode plate is cold-pressed, cut, and slit to obtain a negative electrode of 476 mm × 93.5 mm.

Preparing a separator: A 10 µm-thick polyethylene (PE) microporous film is used as a separator.

Preparing an electrolyte solution: Ethylene carbonate (EC) and propylene carbonate (PC) are mixed at a mass ratio of 1 : 1 in an argon atmosphere glovebox with a water content less than 10 ppm to obtain a base solvent, and then a lithium salt LiPF₆ and a dinitrile compound are added into the base solvent, and mixed well to obtain an electrolyte solution. Based on the mass of the electrolyte solution, the mass pencentage of the LiPF₆ is 12.5%. Regarding the dinitrile compound in this embodiment, based on the total mass of the electrolyte solution, the mass pencentage of adiponitrile is 0.1%.

Preparing a lithium-ion battery: The positive electrode, the separator, and the negative electrode are stacked in sequence such that the separator is located between the positive electrode and the negative electrode to serve a separation function. The stacked structure is wound to obtain an electrode assembly. Tabs are welded to the electrode assembly, and then the electrode assembly is placed into an aluminum laminated film as an outer package, and dehydrated at 80 °C, and then the electrolyte solution is injected into the package. Steps such as vacuum packaging, static standing, chemical formation, shaping, and capacity grading are performed to obtain a lithium-ion battery.

The performance test methods are as follows:

### (1) Capacity retention rate after high- and low-temperature shock test

The prepared lithium-ion batteries are grouped, each group containing 4 batteries. The 4 lithium-ion batteries are charged and discharged separately by performing the following steps, and the discharge capacity retention rate of the batteries is calculated.

A lithium-ion battery is initially charged and discharged in a 25 °C environment first. The battery is charged at a constant current of 0.5C until the voltage reaches 4.3 V, and then charged at a constant voltage, and then discharged at a constant current of 1C until the voltage drops to 2.8 V, thereby completing one charge-and-discharge cycle. The discharge capacity in the first cycle is recorded. Next, the lithium-ion battery is subjected to 100 charge-and-discharge cycles in a -20 °C environment. Within one hour after completion of the low-temperature cycling, the lithium-ion battery is transferred to a 40 °C environment and subjected to 200 charge-and-discharge cycles. The discharge capacity of the battery cycled at 40 °C at the end of the 200^{th} cycle is recorded. Capacity retention rate = (200th-cycle discharge capacity/first-cycle discharge capacity) × 100%.

The evaluation is performed based on the following criteria. A higher capacity retention rate indicates higher performance of the secondary battery after the high- and low-temperature shock test.
A: Capacity retention rate > 85%;
B: 82% ≤ capacity retention rate < 85%;
C: 80% ≤ capacity retention rate < 82%;
D: 75% ≤ capacity retention rate < 80%; and
E: Capacity retention rate < 75%.

### (2) Testing the amount of residual gas

After being filled with the electrolyte solution, the lithium-ion secondary battery is left to stand at a temperature of 25 °C for 5 hours. Next, the battery cell is charged at a constant current of 0.2C at a temperature of 25 °C until the voltage reaches 4.2 V, and then subjected to an aging treatment at a temperature of 60 °C for 12 hours. Afterward, the electrode part of the battery cell (the stacked structure of the positive electrode, the separator, and the negative electrode) is pressurized at 25 kPa for 1 minute, and then the gas entrapment area on the electrode is measured by using an ultrasonic inspection system ("NAUT21", manufactured by JAPANPROBE). A gas entrapment area percentage (%) is calculated by dividing the gas entrapment area by the electrode area. A smaller gas entrapment area percentage indicates a smaller amount of residual gas of the secondary battery.
A: Amount of residual gas ≤ 5%;
B: 5% ≤ amount of residual gas < 10%;
C: 10% ≤ amount of residual gas < 25%;
D: Amount of residual gas ≥ 25%.

The secondary batteries in the following embodiments and comparative embodiments are different from those in Embodiment 1 only in that the positive electrode or the elements in the positive electrode and the mass content of each element, and the constituents and the mass content of each constituent in the electrolyte solution, are adjusted according to Table 1. The specific adjustments and the performance test results are shown in Table 1 below.

During adjustment of the type of the second element, the corresponding metal oxide is used as an inorganic additive.

The secondary battery in Embodiment 25 is different from that in Embodiment 1 only in that the positive electrode material further includes lithium manganese iron phosphate, and the mass ratio of the nickel-cobalt-manganese ternary material to the lithium manganese iron phosphate is 3 : 7.

The secondary battery in Embodiment 26 is different from that in Embodiment 1 only in that the negative electrode includes a negative electrode material layer, and the negative electrode material layer includes artificial graphite and silicon dioxide. The preparation of the negative electrode in this embodiment includes the following steps: preparing a negative electrode material formed of artificial graphite and silicon oxide (SiO₂) at a mass ratio of 9 : 1, and then the negative electrode material, styrene-butadiene rubber, and lithium carboxymethyl cellulose are mixed at a mass ratio of 96.5 : 2.5 : 1 in deionized water. The mixture is stirred well to obtain a negative electrode slurry. The negative electrode slurry is applied evenly onto one surface of an 8 µm-thick negative current collector copper foil, and then dried at 110 °C. The above steps are repeated on the other surface of the negative current collector. The coated negative current collector is cold-pressed, cut, and welded to tabs to obtain a negative electrode.

**Table 1**

| | Elements of first material layer | | Second element | | Dinitrile compound | | Capacity retention rate | Amount of residual gas |
|---|---|---|---|---|---|---|---|---|
| | Type of element | Content (ppm) | Type of element | Content (ppm) | Substance | Content (%) | | |
| Comparative Embodiment 1 | Mg, Al (1: 1) | 2500 | / | / | N1 | 0.1 | D | D |
| Comparative Embodiment 2 | Mg, Al (1 : 1) | 2500 | / | / | / | / | D | D |
| Comparative Embodiment 3 | / | / | / | / | N1 | 0.1 | E | D |
| Comparative Embodiment 4 | / | / | Sn | 150 | N1 | 0.1 | D | D |
| Comparative Embodiment 5 | Mg, Al (1 : 1) | 2500 | Sn | 150 | / | / | D | D |
| Embodiment 1 | Mg, Al (1 : 1) | 2500 | Sn | 150 | N1 | 0.1 | C | C |
| Embodiment 2 | Mg, Al (1 : 1) | 3000 | Ti | 150 | N2 | 0.3 | B | B |
| Embodiment 3 | Mg, Al (1 : 1) | 3000 | Cr | 150 | N3 | 0.3 | B | B |
| Embodiment 4 | Mg, Al (1 : 1) | 3000 | Y | 150 | N4 | 1.2 | B | B |
| Embodiment 5 | Mg, Al (1 : 1) | 3000 | Zr | 150 | N5 | 0.3 | B | B |
| Embodiment 6 | Mg, Al (1 : 1) | 3000 | La | 150 | N6 | 1.2 | B | B |
| Embodiment 7 | Mg, Al (1 : 1) | 3000 | Nb | 150 | N7 | 1.2 | B | B |
| Embodiment 8 | Mg, Al (1 : 1) | 3000 | In | 150 | N8 | 1.2 | B | B |
| Embodiment 9 | Mg, Al (1 : 1) | 3000 | Zn | 150 | N9 | 0.3 | B | B |
| Embodiment 10 | Mg, Al (1 : 1) | 3000 | Sb | 150 | N10 | 1.2 | B | B |
| Embodiment 11 | Mg, Al (1 : 1) | 3000 | Sn | 150 | N1 | 0.4 | B | B |
| Embodiment 12 | Mg, Al (1 : 1) | 4000 | Sn | 150 | N1 | 1.2 | B | A |
| Embodiment 13 | Mg, Al (1 : 1) | 6000 | Sn | 150 | N1 | 2 | A | B |
| Embodiment 14 | Mg, Al (1 : 1) | 8000 | Sn | 150 | N1+N2 | 2+3 | B | B |
| Embodiment 15 | Mg, Al (1 : 1) | 2500 | Sn | 150 | N1 | 1.2 | B | B |
| Embodiment 16 | Mg, Al (1 : 1) | 2500 | Sn | 500 | N1 | 1.2 | A | A |
| Embodiment 17 | Mg, Al (1 : 0.8) | 2500 | Sn | 500 | N1 | 1.2 | B | B |
| Embodiment 18 | Mg, Al (1 : 1.2) | 2500 | Nb | 500 | N1 | 1.2 | B | A |
| Embodiment 19 | Mg, Al (1 : 2) | 2500 | Nb | 1500 | N1 | 1.2 | B | A |
| Embodiment 20 | Mg, Al (1 : 1.3) | 3000 | Nb | 3500 | N1 | 1.2 | A | A |
| Embodiment 21 | Mg, Al (1 : 1) | 2500 | In + Sn + Sb | 1500 | N1 | 1.2 | A | A |
| Embodiment 22 | Mg, Al (1 : 1) | 2500 | Sn | 150 | N1 | 1.2 | B | B |
| Embodiment 23 | Mg, Al, Sr (1 : 1 : 1) | 3750 | Sn | 150 | N1 | 0.1 | B | B |
| Embodiment 24 | Mg, Al, W (1 : 1 : 1) | 3750 | Sn | 150 | N1 | 0.1 | B | B |
| Embodiment 25 | Mg, Al, Sr, W (1 : 1 : 1 : 1) | 5000 | Sn | 150 | N1 | 0.1 | A | A |
| Embodiment 26 | Mg, Al (1 : 1) | 2500 | Sn | 150 | N1 | 1.2 | B | A |

In Table 1, "/" indicates that the substance is not added; N1: adiponitrile; N2: succinonitrile; N3: 1,6-dicyanohexane; N4: tetramethylsuccinonitrile; N5: 2,4-dimethylglutaronitrile; N6: ethylene glycol bis(2-cyanoethyl)ether; N7: 1,4-bis(2-cyanoethoxy)butane; N8: 1,4-dicyano-2-butene; N9: 1,4-dicyano-2,3-dimethyl-2-butene; N10: 1,6-dicyano-2-methyl-5-methyl-3-hexene. The ratio in the round brackets () is the mass ratio of the corresponding elements in the nickel-cobalt-manganese ternary material.

As can be seen from Table 1, the nickel-cobalt-manganese ternary material doped with magnesium and aluminum in this application coordinates with the inorganic additive and with the dinitrile compound in the electrolyte solution to produce a synergistic effect, thereby greatly improving the capacity retention rate and the amount of residual gas of the secondary battery.

Especially, in this application, the nickel-cobalt-manganese ternary material is further doped with tungsten on the basis of the doping first element that coordinates with a proportion of dinitrile compound, thereby further improving the capacity retention rate and the amount of residual gas of the secondary battery.

Especially, in this application, the inorganic additive includes the second element to further improve the capacity retention rate and the amount of residual gas of the secondary battery.

Especially, the second element includes indium, tin, and antimony, thereby further improving the capacity retention rate and the amount of residual gas of the secondary battery.

Especially, the negative electrode material containing a silicon-based material coordinates with the dinitrile compound added in the electrolyte solution to further improve the capacity retention rate of the secondary battery.

The secondary batteries in the following embodiments and comparative embodiments are different from those in Embodiment 11 only in that the constituents and the mass content of each constituent in the electrolyte solution are adjusted according to Table 2. The specific adjustments and the performance test results are shown in Table 2 below.

**Table 2**

| | VC (%) | DEC (%) | VC + DEC (%) | DFA (%) | Capacity retention rate | Amount of residual gas |
|---|---|---|---|---|---|---|
| Embodiment 11 | / | / | / | / | B | B |
| Embodiment 27 | 0.1 | 18.9 | 19 | / | B | B |
| Embodiment 28 | 0.3 | 19 | 19.3 | / | B | A |
| Embodiment 29 | 0.7 | 19 | 19.7 | / | B | A |
| Embodiment 30 | 1 | 19 | 20 | / | B | A |
| Embodiment 31 | 0.3 | 21 | 21.3 | / | A | A |
| Embodiment 32 | 0.7 | 29 | 29.7 | / | A | A |
| Embodiment 33 | 1 | 39 | 40 | / | A | B |
| Embodiment 34 | / | / | / | 0.1 | A | B |
| Embodiment 35 | / | / | / | 0.6 | A | A |
| Embodiment 36 | / | / | / | 1.2 | A | A |
| Embodiment 37 | / | / | / | 3 | B | A |
| Embodiment 38 | 0.3 | 19 | 19.3 | 0.1 | A | A |

Especially, the nickel-cobalt-manganese ternary material is caused to coordinate with the dinitrile compound, vinylene carbonate and diethyl carbonate in the electrolyte solution, thereby improving the capacity retention rate and the amount of residual gas of the secondary battery.

Especially, on the basis of coordination between the nickel-cobalt-manganese ternary material and the dinitrile compound in the electrolyte solution, adding the difluoroethyl acetate can further improve the capacity retention rate and the amount of residual gas of the secondary battery.

Described above are merely preferred embodiments of this application and the technical principles thereof. A person skilled in the art understands that the scope of disclosure in this application is not limited to the technical solutions formed by a specific combination of the foregoing technical features, but encompasses other technical solutions formed by any combination of the foregoing technical features or equivalents thereof, for example, a technical solution formed by replacing any of the foregoing features with a technical feature disclosed herein and serving similar functions.

## Claims

1. A secondary battery, comprising a positive electrode, a negative electrode, and an electrolyte solution; **characterized in that**
the positive electrode comprises a positive current collector and a positive electrode material layer, the positive electrode material layer comprises a first material layer and a second material layer, and the second material layer is disposed between the positive current collector and the first material layer;
the first material layer comprises a nickel-cobalt-manganese ternary material, the nickel-cobalt-manganese ternary material comprises a first element, and the first element comprises magnesium and aluminum;
the second material layer comprises an inorganic additive, the inorganic additive comprises a second element, and the second element comprises at least one of titanium, chromium, yttrium, zirconium, lanthanum, niobium, indium, tin, zinc, or antimony; and
the electrolyte solution comprises a dinitrile compound.

2. The secondary battery according to claim 1, wherein the first material layer further comprises lithium manganese iron phosphate.

3. The secondary battery according to claim 1 or 2, wherein the second element comprises indium, tin, and antimony.

4. The secondary battery according to any one of claims 1 to 3, wherein the nickel-cobalt-manganese ternary material further comprises strontium and/or tungsten.

5. The secondary battery according to any one of claims 1 to 4, wherein the dinitrile compound comprises at least one of: succinonitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylsuccinonitrile, 2-methylglutaronitrile, 2,4-dimethylglutaronitrile, 2,2,4,4-tetramethylglutaronitrile, 1,4-dicyanopentane, 2,6-dicyanoheptane, 2,7-dicyanooctane, 2,8-dicyanononane, 1,6-dicyanodecane, 1,2-dicyanobenzene, 1,3-dicyanobenzene, 1,4-dicyanobenzene, ethylene glycol bis(2-cyanoethyl)ether, diethylene glycol bis(2-cyanoethyl)ether, triethylene glycol bis(2-cyanoethyl)ether, tetraethylene glycol bis(2-cyanoethyl)ether, 3,6,9,12,15,18-hexaoxaeicosanedinitrile, 1,3-bis(2-cyanoethoxy)propane, 1,4-bis(2-cyanoethoxy)butane, 1,5-bis(2-cyanoethoxy)pentane, ethylene glycol bis(4-cyanobutyl)ether, 1,4-dicyano-2-butene, 1,4-dicyano-2-methyl-2-butene, 1,4-dicyano-2-ethyl-2-butene, 1,4-dicyano-2,3-dimethyl-2-butene, 1,4-dicyano-2,3-diethyl-2-butene, 1,6-dicyano-3-hexene, 1,6-dicyano-2-methyl-3-hexene, or 1,6-dicyano-2-methyl-5-methyl-3-hexene.

6. The secondary battery according to any one of claims 1 to 5, wherein based on a total mass of the positive electrode material layer, a mass content of the first element is n₁, satisfying: 1200 ppm ≤ n₁ ≤ 10000 ppm.

7. The secondary battery according to any one of claims 1 to 6, wherein in the first element, a mass ratio of magnesium to aluminum is 1 : (0.8 to 1.2).

8. The secondary battery according to any one of claims 1 to 7, wherein based on the total mass of the positive electrode material layer, a mass content of the second element is n₂, satisfying: 1 ppm ≤ n₂ ≤ 5000 ppm.

9. The secondary battery according to any one of claims 1 to 8, wherein the nickel-cobalt-manganese ternary material further comprises a third element, and the third element comprises strontium and/or tungsten, and, based on the total mass of the positive electrode material layer, a mass content of the third element is n₃, satisfying: 1 ppm ≤ n₃ ≤ 5000 ppm.

10. The secondary battery according to any one of claims 1 to 9, wherein the negative electrode comprises a negative electrode material layer, and the negative electrode material layer comprises a silicon-based material.

11. The secondary battery according to any one of claims 1 to 10, wherein the electrolyte solution further comprises vinylene carbonate and diethyl carbonate; and, based on a mass of the electrolyte solution, an aggregate mass pencentage of the vinylene carbonate and the diethyl carbonate is 19% to 40%.

12. The secondary battery according to claim 11, wherein based on the mass of the electrolyte solution, the electrolyte solution satisfies at least one of:
(1) a mass pencentage of the vinylene carbonate is 0.01% to 1%; or
(2) a mass pencentage of the diethyl carbonate is 19% to 39%.

13. The secondary battery according to any one of claims 1 to 12, wherein the electrolyte solution further comprises difluoroethyl acetate; and, based on a mass of the electrolyte solution, a mass pencentage of the difluoroethyl acetate is 0.01% to 3%.

14. The secondary battery according to any one of claims 1 to 13, wherein based on a mass of the electrolyte solution, a mass pencentage of the dinitrile compound is 0.1% to 5%.

15. An electronic device, comprising a secondary battery according to any one of claims 1 to 14.
